# EUROPÄISCHE PATENTANMELDUNG

(11) **EP 4 417 511 A1**
(43) Veröffentlichungstag der Anmeldung: **21.08.2024**
(21) Anmeldenummer: 23157602.6
(22) Anmeldetag: 20.02.2023
(51) Int. Cl.: B64C 29/00

(54) **VTOL-FLUGZEUG**

(71) Anmelder: Wettstein, Jürg, 8330 Pfäffikon (CH)
(72) Erfinder: Wettstein, Jürg, 8330 Pfäffikon (CH)
(74) Vertreter: Keller Schneider Patent- und Markenanwälte AG

(57) **Zusammenfassung**

Die Erfindung betrifft ein VTOL-Flugzeug, welches aufweist (a) ein Reiseflugsystem aufweisend mindestens eine Tragfläche, wobei die Tragfläche ausgebildet ist zur Erzeugung von dynamischem Auftrieb während eines Reiseflugs, (b) ein Schwebeflugsystem aufweisend mindestens ein Auftriebselement und mindestens ein Stabilisierungselement, wobei (i) das Auftriebselement ausgebildet ist zum Bereitstellen einer Auftriebskraft für einen Schwebeflug und (ii) das Stabilisierungselement ausgebildet ist zum Bereitstellen mindestens einer Stabilisierungskraft mit einem jeweiligen Hebel bezüglich einer Längsachse, einer Querachse und/oder einer Hochachse des VTOL-Flugzeugs während des Schwebeflugs und während eines Übergangs vom Schwebeflug zum Reiseflug und eines Übergangs vom Reiseflug zum Schwebeflug.

## Beschreibung

### Technisches Gebiet

Die vorliegende Erfindung betrifft ein VTOL-Flugzeug, d.h. ein vertikal startendes und landendes Flugzeug (das englische Akronym VTOL steht für Vertical Tal<e-Off and Landing), oder anders gesagt, ein Flugzeug, das sich zum Senl<rechtstart und zur Senl<rechtlandung eignet.

Ein gattungsgemässes VTOL-Flugzeug ist für einen hauptsächlich horizontalen Reiseflug mit einem Tragflügel ausgestattet und nutzt den Schwebeflug im Wesentlichen nur für den Senl<rechtstart und die Senl<rechtlandung. Es bleibt selbstverständlich möglich auch horizontal zu starten und zu landen. Das erfindungsgemässe VTOL-Flugzeug kann bemannt oder unbemannt sein.

### Stand der Technik

Tragflächen-Flugzeuge erlauben einen effizienten horizontalen Reiseflug, weil Sie sich den dynamischen Auftrieb zu Nutze machen, der durch die Tragflächenprofile ermöglicht wird. Allerdings benötigen diese Flugzeuge viel Platz für Start und Landung, sowie einen gewissen Luftl<orridor für Anflug und Abflug.

Tragschrauber, insbesondere Helikopter oder Multil<opter, hingegen sind äusserst punktuell und flexibel bei Start und Landung, benötigen aber vergleichsweise viel Energie für einen Reiseflug. Somit gelingen Tragschraubern keine grossen Reichweiten und keine hohen Geschwindigkeiten.

Es existieren zahlreiche Konzepte zur Kombination der senkrechten Start- und Lande-Eigenschaften mit den Vorteilen reiner Flächen-Flugzeuge. Derartige I<ombinations-Systeme sind komplexer und haben deshalb systembedingt auch Nachteile gegenüber reinen Flächen-Flugzeugen.

Zum Stand der Technik gehören ganz unterschiedliche Konzepte.

Schwenl<flügler beispielsweise kippen die Tragfläche mit den Motoren um ca. 90 Grad.

Schwenkantriebe kippen nur die am Flugzeug (Tragfläche/Rumpf/Leitwerl<) angebrachten einzelnen Motoren um ca. 90 Grad.

Andere Systeme arbeiten mit Auslegern an der Rumpfseite und/oder an den Tragflächen, um z.B. vier Auftriebspunl<te analog einem Quadcopter mit einem Flächenflugzeug zu kombinieren.

Derartige im Reiseflug freistehende Ausleger und/oder Propeller verursachen allerdings erheblichen Luftwiderstand und die ungünstige Verteilung der Massen weit entfernt vom Schwerpunkt hat eine unerwünschte Massenträgheit des Gesamtsystems zur Folge, wobei die Ausleger zudem anfällig für Vibrationen bzw. Schwingungen sein können.

Die Anforderungen an die Schub-Antriebseinheiten für die Entwicklung eines hohen Schubes für den Schwebeflug und für die Entwicklung einer hohen Reisefluggeschwindigl<eit sind ausserdem erheblich unterschiedlich. Schwenkantriebe, die sowohl im Schwebeflug als auch im Reiseflug optimal arbeiten sollen, kommen daher oft nicht um einen VerstellMechanismus (z.B. variabler Pitch, variabler Querschnitt der Schubdüse etc.) herum, was wiederum die Komplexität, die Kosten für den Unterhalt und das Ausfallrisiko erhöht.

### Aufgabe der Erfindung

Flächenflugzeuge mit der Eigenschaft senkrecht starten und landen zu können, sind deshalb u.a. dahingehend zu optimieren, dass möglichst wenig zusätzliche Masse anfällt, die Massenverteilung des Gesamtsystems nicht ungünstig ausfällt, der Luftwiderstand im Reiseflug gering ist, das System bzw. die Mechanik einfach und ausfallsicher bzw. Redundant ist, ein stabiles Schweben / Manövrieren möglich ist, genügend Raum vorhanden und genügend Tragfähigkeit für Nutzlast gegeben ist.

Daher ist es eine Aufgabe der Erfindung, ein verbessertes VTOL-Flugzeug bereitzustellen. Die Lösung der Aufgabe ist durch die Merkmale des Anspruchs 1 definiert.

### Darstellung der Erfindung

Die vorliegende Erfindung betrifft ein VTOL-Flugzeug, welches aufweist (a) ein Reiseflugsystem aufweisend mindestens eine Tragfläche, wobei die Tragfläche ausgebildet ist zur Erzeugung von dynamischem Auftrieb während eines Reiseflugs, (b) ein Schwebeflugsystem aufweisend mindestens ein Auftriebselement und mindestens ein Stabilisierungselement, wobei (i) das Auftriebselement ausgebildet ist zum Bereitstellen einer Auftriebskraft für einen Schwebeflug und (ii) das Stabilisierungselement ausgebildet ist zum Bereitstellen mindestens einer Stabilisierungskraft mit einem jeweiligen Hebel bezüglich einer Längsachse, einer Querachse und/oder einer Hochachse des VTOL-Flugzeugs während des Schwebeflugs und während eines Übergangs vom Schwebeflug zum Reiseflug und eines Übergangs vom Reiseflug zum Schwebeflug.

Insbesondere sind Auftriebselement und Stabilisierungselement separate Elemente. Das bedeutet, dass mit dem Auftriebselement und Stabilisierungselement tatsächlich zwei voneinander zu unterscheidende Elemente vorhanden sind.

Insbesondere ist das Auftriebselement nicht zur Stabilisierung ausgelegt und das Stabilisierungselement nicht zum Auftrieb.

Insbesondere ist das Auftriebselement nur zum Bereitstellen der Auftriebskraft für den Schwebeflug ausgebildet und das Stabilisierungselement nur zum Bereitstellen der Stabil isierungsl<raft.

Insbesondere ist die Formulierung «bezüglich einer Längsachse, einer Querachse und/oder einer Hochachse» zu verstehen als «bezüglich mindestens einer Achse aus einer Gruppe, die eine Längsachse, eine Querachse und eine Hochachse umfasst».

Insbesondere kann das VTOL-Flugzeug einen Computer aufweisen, der das Reiseflugsystem und/oder das Schwebeflugsystem steuert bzw. regelt.

Insbesondere kann das Auftriebselement bzw. eines der Auftriebselemente derart krümmbar, verschwenkbar oder umlenkbar ausgestaltet sein, dass es zum Bereitstellen einer Schubkraft für den Reiseflug ausgebildet ist.

Insbesondere weist das Reiseflugsystem weiterhin mindestens ein, insbesondere eigens dafür vorgesehenes, Vortriebselement auf, das ausgebildet ist zum Bereitstellen einer Schubkraft für den Reiseflug. In einer Ausführungsform ohne ein derartiges Vortriebselement ist anstelle von Reiseflug allenfalls ein antriebsloser Segelflug möglich.

Insbesondere verlaufen Längsachse, Querachse und Hochachse durch den Massenmittelpunkt des VTOL-Flugzeugs.

Insbesondere ist das wenigstens eine Stabilisierungselement in einer Ebene angeordnet, die von der Längsachse und der Hochachse aufgespannt wird.

Insbesondere ist das wenigstens eine Stabilisierungselement schwenkbar und derart angeordnet, dass eine Schwenkachse des Stabilisierungselements in einer Ebene angeordnet ist, die von der Längsachse und der Hochachse aufgespannt wird. Eine weitere Schwenkachse kann als parallele zur Querachse ausgeführt sein.

In manchen Ausführungsformen ist das Auftriebselement derart ausgebildet, dass ein Vektor der Auftriebskraft um die Längsachse, die Querachse, und/oder eine zur Querachse parallele Achse schwenkbar ist.

Insbesondere kann das Schwebeflugsystem ein in einem Rumpf des VTOL-Flugzeugs angeordnetes Auftriebselement aufweisen, welches zum Bereitstellen einer Auftriebskraft ausgebildet und so angeordnet sind, dass die Auftriebskraft in einem Massenmittelpunkt des VTOL-Flugzeugs angreift.

In manchen Ausführungsformen umfasst das Schwebeflugsystem aber zwei in einem Rumpf des VTOL-Flugzeugs angeordnete Auftriebselemente, die jeweils zum Bereitstellen einer Auftriebskraft ausgebildet und so angeordnet sind, dass eine der beiden Auftriebskräfte bezüglich der Längsachse vor und die andere hinter einem Massenmittelpunkt des VTOL-Flugzeugs angreifen.

Insbesondere sind die Auftriebselemente in Fächern im Rumpf angeordnet, die durch Klappen und/oder durch anderweitige Abdeckungen geöffnet und verschlossen werden können. Für den Reiseflug, bei dem der Auftrieb vom Tragflächenprofil des Starrflügels erzeugt wird, werden die Klappen geschlossen und der Rumpf erhält eine aerodynamisch günstige Oberfläche, wohingegen für den Schwebeflug die Klappen geöffnet bleiben.

Insbesondere sind die Klappen auch zum Umlenken der von den Auftriebselementen erzeugten Luftstrahlen verwendbar.

In manchen Ausführungsformen sind die beiden Auftriebselemente oder jeweilige, insbesondere eigens dafür vorgesehene, Umlenkelemente der Auftriebselemente derart verschwenkbar, dass die beiden Auftriebskräfte ein auf das VTOL-Flugzeug wirkendes Giermoment erzeugen. Insbesondere wird dies durch eine gegenläufige Verschwenkung der Auftriebselemente/Umlenl<elemente bezüglich der Längsachse bewirkt.

Insbesondere sind durch die umlenkenden Klappen, die Verschwenkung der Auftriebselemente und/oder die Verschwenkung der Umlenkelemente Kräfte entlang der Längsachse und/oder der Querachse erzielbar.

In manchen Ausführungsformen sind die beiden Auftriebselemente derart ansteuerbar, dass mittels einer Schub-Differenz ein Nickmoment bereitstellbar ist.

Insbesondere können die beiden Auftriebselemente auch derart verschwenkbar um eine zur Querachse parallele Achse ausgebildet sein, dass mittels einer Schubrichtungs-Differenz ein Nickmoment bereitstellbar ist.

In manchen Ausführungsformen ist das mindestens eine Stabilisierungselement, insbesondere und das mindestens eine Auftriebselement, in einem Rumpf des VTOL-Flugzeugs verstaubar und aus dem Rumpf ausfahrbar ausgebildet.

Insbesondere kann auch hier das Fach, in welchem das Stabilisierungselement versinkt, durch 1<lappen derart verschliessbar ausgeführt sein, dass der Rumpf eine aerodynamisch optimierte Oberfläche erhält. Während der Benutzung des Stabilisierungselements können die Klappen offen stehen.

In manchen Ausführungsformen weist das Schwebeflugsystem eine Hebelvorrichtung auf, welche mit einem ersten Ende schwenkbar innerhalb des Rumpfs gelagert ist und an deren zweiten Ende das mindestens eine Stabilisierungselement angeordnet ist.

Insbesondere ist die Hebelvorrichtung als ein Gestänge oder Gerüst ausgebildet.

In manchen Ausführungsformen weist das Schwebeflugsystem eine Ausfahrvorrichtung auf, welche mit einem ersten Ende innerhalb des Rumpfs befestigt ist und deren zweites Ende, an welchem das mindestens eine Stabilisierungselement angeordnet ist, dazu ausgebildet ist, teleskopartig aus dem Rumpf auszufahren.

Insbesondere sind die Hebelvorrichtung bzw. die Ausfahrvorrichtung (ebenso wie das Stabilisierungselement) in dem besagten Fach im Rumpf eintauchbar und herausfahrbar.

In manchen Ausführungsformen ist das Stabilisierungselement um mindestens eine Achse derart an dem zweiten Ende verschwenkbar gelagert, dass die Stabilisierungskraft zumindest ein auf das VTOL-Flugzeug wirkendes Rollmoment erzeugt.

Insbesondere ist das Stabilisierungselement um eine zur Längsachse parallelen Achse an dem zweiten Ende verschwenkbar gelagert.

In manchen Ausführungsformen ist das Schwebeflugsystem dazu ausgebildet, die Hebelvorrichtung bzw. die Ausfahrvorrichtung zu verschwenken.

Insbesondere ist eine Schwenkachse dieser Verschwenkbarkeit innerhalb des Rumpfes angeordnet und parallel zur Querachse.

Insbesondere kann diese Verschwenkbarkeit genutzt werden zum Verstauen und Herausfahren der Hebelvorrichtung bzw. Ausfahrvorrichtung oder aber auch zur Stabilisierung des Schwebeflugs.

In manchen Ausführungsformen umfasst das Schwebeflugsystem mindestens zwei bezüglich der Längsachse hintereinander angeordnete Stabilisierungselemente.

Insbesondere können diese beiden Stabilisierungselemente an einer einzelnen Hebelvorrichtung oder Ausfahrvorrichtung angeordnet sein oder an jeweiligen, separaten Hebelvorrichtungen bzw. Ausfahrvorrichtungen, die in separaten Fächern im Rumpf verstaubar sind, insbesondere ein Stabilisierungselement vor dem Massenmittelpunkt und eines hinter dem Massenmittelpunkt (bezüglich der Längsachse), im Speziellen ein Stabilisierungselement vor einem Cockpit und eines hinter dem Cockpit (bezüglich der Längsachse).

In manchen Ausführungsformen umfasst das Stabilisierungselement einen motorisierten Propeller, 1<lapp-Propeller, Rotor, Mantelpropeller, Impeller und/oder ein Turbinen-Strahltriebwerl< (z.B. Jet-Triebwerl< mit/ohne Mantelstrom, Propfantriebwerl<).

Insbesondere ist auch das Auftriebselement und/oder das Vortriebselement als ein motorisierten Propeller, 1<lapp-Propeller, Rotor, Mantelpropeller, Impeller bzw. Turbinen-Strahltriebwerl< (Jet-Triebwerk mit/ohne Mantelstrom, Propfantriebwerl<) ausgebildet.

In manchen Ausführungsformen ist das Stabilisierungselement und/oder Auftriebselement zur zyklischen und/oder kollektiven Blattverstellung ausgebildet.

Insbesondere können durch die zyklische und/oder kollektive Blattverstellung Momente auf die Querachse oder die Längsachse erzeugt werden, ohne dass das Stabilisierungselement verschwenkbar gegenüber der Hebelvorrichtung bzw. der Ausfahrvorrichtung ausgebildet ist.

In manchen Ausführungsformen ist das Schwebeflugsystem dazu ausgebildet, eine Drehzahl und einen Schwenkwinkel (somit den Schubvektor) des Stabilisierungselements zu steuern.

Insbesondere kann der Schwenkwinkel des Stabilisierungselements dabei durch mindestens einen Servomotor gesteuert werden.

Insbesondere ist für diese Steuerung der bereits erwähnte Computer ausgebildet und entsprechend mit dem mindestens einen Stabilisierungselement verbunden.

Insbesondere kann auch das Auftriebselement und/oder das Vortriebselement vom Computer geregelt/gesteuert werden.

In manchen Ausführungsformen ist das Stabilisierungselement als Multil<opter ausgebildet. Der Schwenkwinkel kann bei dem Multil<opter durch mindestens einen Servomotor oder aber durch Schubdifferenz der einzelnen Antriebe des Multil<opters gesteuert werden. Aufgrund der aerodynamischen, d.h. länglichen und schmalen Bauform des Rumpfes kann eine Anordnung der einzelnen Antriebe des Multil<opters bezüglich dessen Längsachse in zwei Reihen mit jeweils zwei oder mehreren Antrieben auf jeder Seite der Längsachse ausgeführt werden.

Insbesondere kann der Multil<opter über ein Gelenk mit der Hebelvorrichtung bzw. der Ausfahrvorrichtung verbunden sein, insbesondere mit einem Scharniergelenk oder einem Kardangelenk.

Insbesondere kann das Schwebeflugsystem ein Auftriebselement aufweisen, welches zugleich die Eigenschaften des Stabilisierungselements aufweist, und ein Stabilisierungselement aufweisen, welches zugleich die Eigenschaften des Auftriebselements aufweist. Damit liegen zwei gleichartige Elemente vor, die insbesondere als motorisierte Propeller, 1<lapp-Propeller, Rotoren, Mantelpropeller, Impeller, Turbinen-Strahltriebwerl<e (Jet-Triebwerk-Antrieb mit/ohne Mantelstrom, Propfantriebwerl<) ausgebildet sind und sowohl den Auftrieb als auch die Schwebeflug-Stabilisierung übernehmen.

Insbesondere sind Auftriebselement, Vortriebselement und/oder Stabilisierungselement wahlweise ein Elektromotor oder eine Verbrennungskraftmaschine.

In anderen Worten ausgedrückt, ermöglicht die Erfindung eine moderne aerodynamische Auslegung der Tragflächen und des Rumpfes, insbesondere die Wahl moderner dünner Tragflächen-Profilen ohne aerodynamisch störende Anbauten wie z.B. Ausleger mit im Luftstrom freistehender Motoren und Propellern.

Insbesondere werden in Längsachse im Rumpf vor und hinter dem Schwerpunkt mindestens je eine Schubvorrichtung mit Schub hauptsächlich parallel zur Hochachse (Impeller, Propeller, Ducted Fan, Jet-Turbinen etc.) mit bestimmtem Abstand zum Schwerpunkt eingebracht.

Insbesondere können die beiden vorgenannten Schubvorrichtungen bezüglich der Längsachse parallel oder gegenläufig verschwenkt werden. Ebenso können die beiden vorgenannten Schubvorrichtungen bezüglich der Querachse parallel verschwenkbar ausgeführt werden.

Anstelle oder in Kombination mit der vorgenannten verschwenkbaren Ausführungen kann der Schub der vorgenannten Schubvorrichtungen auch mittels Klappen, Lamellen etc. teilweise zur Seite und/oder vorwärts bzw. rückwärts abgelenkt werden.

Die beiden Schubvorrichtungen gemäss vorstehender Ausführung ermöglichen Translationen entlang der Hochachse (senkrecht Auf- und Abstieg bzw. Schweben), der Längsachse (vorwärts bzw. rückwärts schweben) und der Querachse (Schweben zur einen oder anderen Seite) sowie Gieren um die Hochachse.

Wird der Schub der vorgenannten Schubvorrichtungen dabei durch verschwenken oder mittels Klappen, Lamellen etc. zur Steuerung abgeleitet sind vorgenannte Translationsbewegungen möglich, ohne Nick- bzw. Rollbewegung des Fluggerätes.

Ohne Vektorsteuerung des Schubes, d.h. bei Schub stets parallel zur Hochachse, wäre die Translationsbewegung entlang der Längsachse (vorwärts bzw. rückwärts schweben) durch Nickbewegung möglich. Die Nickbewegung wird durch Schub-Differenz der beiden vorgenannten Schubvorrichtungen erreicht. Ebenso wäre ohne Vektorsteuerung des Schubes, d.h. bei Schub stets parallel zur Hochachse, die Translationsbewegung entlang der Querachse (Schweben zur einen oder anderen Seite) durch Rollbewegung möglich. Zur Steuerung und Stabilisierung der Rollbewegung kommt das mindestens eine Stabilisierungselement, welches allenfalls zugleich als Auftriebselement ausgeführt sein kann, zur Anwendung.

Bevorzugt wird zur Steuerung der Rollbewegung an mindestens einem Ausleger in der aus der Längs- und Hochachse gebildeten Ebene mindestens eine Schubvorrichtung bezüglich der Querachse (Schub zu jeder Seite) vorgeschlagen. Der Schub parallel zur Querachse (zur einen oder anderen Seite hin) in bestimmtem Abstand zum Schwerpunkt kann dabei mittels parallel zur Längsachse verschwenkbarer Lagerung der Schubvorrichtungen, durch Umlenkung des Schubes oder mittels für jede Seite separater Schubvorrichtungen bzw. mittels variablem positivem oder negativem Pitch erreicht werden.

Bevorzugt kann die vorgenannte Vorrichtung zur Steuerung der Rollbewegung (Ausleger mit separater Schubvorrichtung) für den Reiseflug und, soweit Querruder zur Steuerung der Rollbewegung vorhanden sind, mittels Schwenkbewegung in eine Aufnahmekammer bzw. Aufnahmekammern in den Rumpf eingefahren oder verschwenkt verstaut werden.

Für den Reiseflug (Auftrieb der Tragflächen) kann wahlweise eine separate Schubvorrichtung mit Schub in Längsrichtung oder aber ein Verschwenken der für den Schwebeflug notwendigen Schubvorrichtungen zur Anwendung gelangen. Wahlweise kann durch Steuerung des vorgenannten Schubvektors ein separates Höhen- bzw. Seitenruder entfallen.

Der Rumpf als möglichst stromlinienförmiger, im Vergleich zu den Tragflächen voluminöser Körper, eignet sich zur Unterbringung der Schubvorrichtungen. Der voluminöse Rumpf eignet sich zur Aufnahme der notwendigen Tragstrukturen und zur Aufnahme der Schub-, Quer- und Torsionskräfte der Schubvorrichtungen.

Raum für Cockpit, Personen und/oder Fracht ist beispielsweise im Nahbereich des Schwerpunktes gegeben.

Bevorzugt kann der Ausleger mit Schubvorrichtung zur Steuerung und Kontrolle mindestens der Rollachse für den Reiseflug und zur Reduktion des Luftwiderstandes in eine Aufnahmekammer im Rumpf eingeschwenkt werden. Mittels Klappen können die vorderen und hinteren Schubvorrichtungen im Rumpf für den Reiseflug verschlossen werden, soweit eine separate Schubvorrichtung den Schub für den Reiseflug bereitstellt.

Aufgrund der Anströmung im Reiseflug wird der Auftrieb durch die Tragflächen und die Steuerung der Rollbewegung um die Längsachse durch die Querruder bereitgestellt.

Der Ausleger mit separater Schubvorrichtung dient bevorzugt alleine der Steuerung und Kontrolle der Rollbewegung. Er kann damit viel kleiner dimensioniert werden, als wenn der Ausleger mit Schubvorrichtung zugleich den Auftrieb für den Schwebeflug bereitstellen müsste. Als eher kleine Komponente kann er deshalb ohne Nachteile an einem einfachen Ausleger oder Stab verschwenkbar oder teleskopartig einschiebbar angebracht werden.

Die Tragflächen müssen somit keine separaten Schubvorrichtungen aufnehmen und können aerodynamisch optimal und widerstandsarm für den Reiseflug ausgelegt werden.

### Kurze Beschreibung der Zeichnungen

Weitere Vorteile der vorliegenden Erfindung sind aus der detaillierten Beschreibung und den Zeichnungen ersichtlich.
Figur 1 ist eine Seitenansicht eines VTOL-Flugzeugs gemäss einer ersten beispielhaften Ausführungsform der vorliegenden Erfindung, wobei die Stabilisierungselemente für den Schwebeflug ausgefahren sind;
Figur 2 zeigt eine Vorderansicht des VTOL-Flugzeugs aus Figur 1;
Figur 3 zeigt eine Draufsicht des VTOL-Flugzeugs aus Figuren 1 und 2;
Figur 4 zeigt eine Seitenansicht des VTOL-Flugzeugs aus Figuren 1 bis 3, wobei die Stabilisierungselemente für den Reiseflug eingefahren sind;
Figur 5 zeigt eine Seitenansicht eines VTOL-Flugzeugs gemäss einer zweiten Ausführungsform der vorliegenden Erfindung, wobei die Stabilisierungs- und Auftriebselemente für den Schwebeflug ausgefahren sind; und
Figur 6 zeigt eine Draufsicht des VTOL-Flugzeugs aus Figur 5.

### Wege zur Ausführung der Erfindung

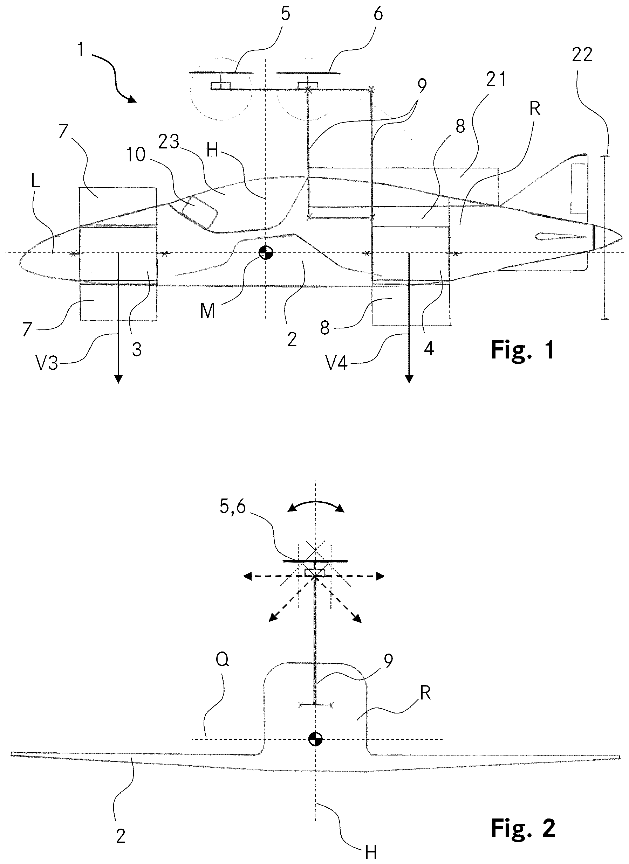

Figur 1 ist eine Seitenansicht eines VTOL-Flugzeugs 1 gemäss einer ersten beispielhaften Ausführungsform der vorliegenden Erfindung, wobei die Stabilisierungselemente 5 und 6 für den Schwebeflug ausgefahren sind. Die Stabilisierungselemente 5 und 6 sind hier als Propeller ausgeführt und motorisiert drehbar an einem ersten Ende der als Gerüst ausgeführten Hebelvorrichtung 9 gelagert. Die beiden Propeller 5 und 6 sind weiterhin verschwenkbar um eine Achse, die parallel zur Längsachse L ist. Diese Verschwenkbarkeit ist in den Figuren 1 bis 3 durch die angedeuteten Stellungen der Propeller angedeutet. Die Achsen L, Q und H verlaufen durch den Massenmittelpunkt M des Flugzeugs 1. Das Flugzeug 1 weist ein Cockpit 23 auf.

Das Gerüst 9 ist ein Doppelgestänge, welches wie ein Parallelogramm zusammenklappen kann. Die beiden Propeller 5 und 6 sind jeweils von der Hochachse H gleich weit entfernt. Die Auftriebselemente 3 und 4 sind im Rumpf R des VTOL-Flugzeugs 1 platziert und deren Kraftvektoren V3 und V4 greifen, trotz Verschwenkbarkeit, stets an der Längsachse L an. Die Erzeugung von Rollmoment ist den Auftriebselementen 3 und 4 somit nicht möglich. Eine hauptsächliche Aufgabe der Stabilisierungselemente 5 und 6 ist daher die Erzeugung von ausgleichenden Rollmomenten für einen stabilen Schwebeflug. Hierfür können die Propeller 5 und 6 je nach Bedarf in einem Winkel zwischen 0 und 90 Grad je nach links oder rechts umschwenken (siehe Figur 2) und die Drehzahl variieren. Mindestens ein Servomotor steuert den Drehwinkel nach links und rechts. Die Hebelvorrichtung kann durch einen Servomotor in den Rumpf ein- oder aus dem Rumpf ausgefahren werden. Alternativ oder in Kombination kann die Hebelvorrichtung mit dem Schubantrieb des Stabilisierungselements ausgefahren und mit Schwerkraft eingefahren werden. Insbesondere ist ein Computer 10 dazu ausgebildet, die hierfür benötigten Ansteuerungen und Regelungen auszuführen.

Die besagte Verschwenkbarkeit der Auftriebselemente 3 und 4 ist um die Längsachse L und um eine Achse gegeben, die parallel zur Querachse Q steht. Damit sind translatorische Bewegungen entlang der Längsachse L bzw. Querachse Q möglich. Die Auftriebselemente 3 und 4 sind im Rumpf R fest eingelassen und der Luftstrom kann durch die Klappen 7 und 8 eintreten und entweichen. Im vorliegenden Beispiel handelt es sich bei den Auftriebselementen 3 und 4 um Impeller und/oder Turbinen.

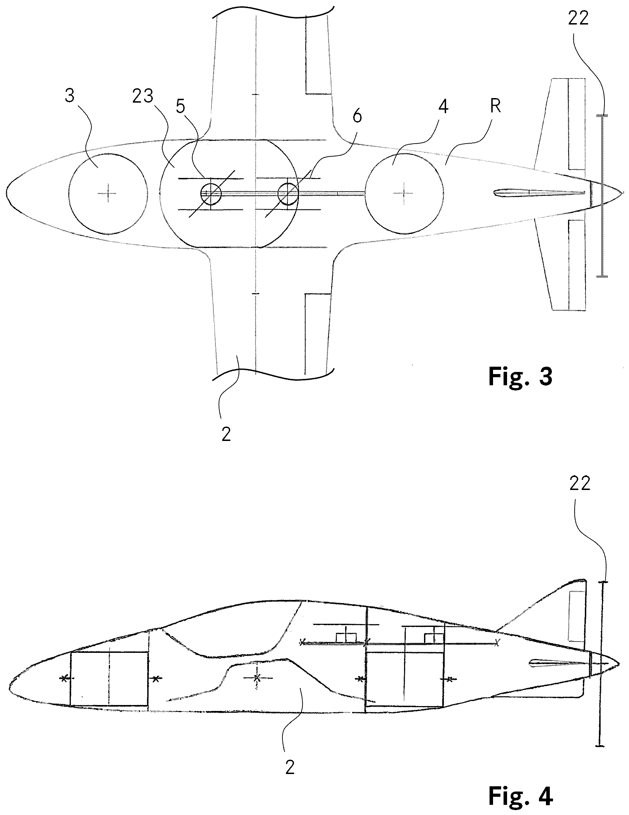

Auch das Fach, in welchem die Stabilisierungselemente 5 und 6 innerhalb des Rumpfs R verstaut sind (siehe Figur 4), wird mit Klappen 21 (siehe Figur 1) verschlossen. In den Figuren 2 und 3 sind die Klappen vereinfachend nicht gezeigt. Somit ist das Flugzeug 1 aerodynamisch optimiert für den Reiseflug. Dafür hat das Flugzeug 1 weiterhin ein Vortriebselement 22, welches hier als Propeller ausgeführt ist.

Figur 2 zeigt eine Vorderansicht des VTOL-Flugzeugs 1 aus Figur 1. Die Tragfläche 2 dient dem späteren Reiseflug, der mit einem Übergang vom Schwebeflug eingeleitet wird. Das Gestänge 9 ist entlang der Querachse Q im Wesentlichen nicht ausgeprägt, unter anderem damit eine gute Verstaubarkeit im Rumpf R gewährleistet ist. Mit dem gebogenen Pfeil sowie mit den gestrichelten Linien der Propeller in vier weiteren verschiedenen Ausrichtungen ist die Verschwenkbarkeit der Stabilisierungselemente 5 und 6 angedeutet. Die zu diesen verschiedenen Ausrichtungen gehörenden gestrichelten Vel<torpfeile weisen auf die dann jeweils erzeugten Stabilisierungskräfte hin. In der gezeigten Grundstellung sind die Propeller 5 und 6 horizontal ausgerichtet und rotieren beispielsweise nur im Leerlauf. Sobald der Bedarf zum Ausgleich einer ungewünschten Rollbewegung besteht, werden die Stabilisierungselemente 5, 6 zur jeweiligen Seite verschwenkt und erzeugen den erforderlichen Schub. Mit der Verschwenkung kann, auch wegen der vergleichsweise geringen zu bewegenden Massen bzw. der geringen Massenträgheit, eine sehr schnelle Reaktionsfähigkeit erreicht werden.

Figur 3 zeigt eine Draufsicht des VTOL-Flugzeugs 1 aus Figuren 1 und 2. Zu sehen sind die Auftriebselemente 3 und 4, die zentral im Rumpf R untergebracht sind. Die ausgefahrenen Stabilisierungselemente 5 und 6 befinden sich für die Zeit des Schwebeflugs und während der Übergänge vom/zum Reiseflug oberhalb des Cockpits 23. In diesen Zeiten werden Nick- und Giermomente (vornehmlich) mit den Auftriebselementen 3 und 4 erzeugt, wobei Rollmomente mit den Stabilisierungselementen 5 und 6 erzeugt werden. Damit ist ein stabiler Schwebeflug gewährleistet, ohne auf schwere, komplexe und bezüglich Massenträgheit ungünstig verteilte Elemente zurückzugreifen. Die erfindungsgemässe Konstruktion spart insbesondere Gewicht ein, was für den Senl<rechtstart ein sehr wichtiges Kriterium ist.

Figur 4 zeigt eine Seitenansicht des VTOL-Flugzeugs aus Figuren 1 bis 3, wobei die Stabilisierungselemente 5, 6 für den Reiseflug eingefahren sind. Der Auftrieb wird nun eigens durch die Tragfläche 2 erzeugt.

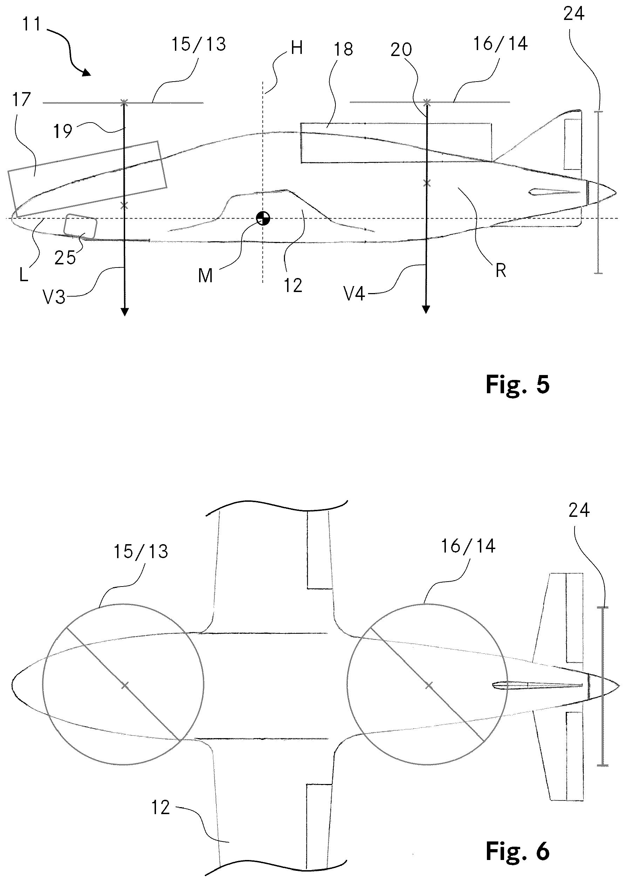

Figur 5 zeigt eine Seitenansicht eines unbemannten VTOL-Flugzeugs 11 gemäss einer zweiten Ausführungsform der vorliegenden Erfindung, wobei die Stabilisierungs- und Auftriebselemente 13/15, 14/16 für den Schwebeflug ausgefahren sind. Das Stabilisierungselement 15 des Flugzeugs 11 ist auch als Auftriebselement 13 ausgebildet, indem der 1<lapp-Propeller bzw. Rotor deutlich grösser dimensioniert ist. Die PropellerBlätter sind klappbar ausgeführt, damit diese parallel an die Ausleger angelegt werden können und weniger Stauraum beanspruchen. Das Auftriebselement 14 ist zugleich auch als Stabilisierungselement 16 ausgebildet, indem es ebenso wie das Stabilisierungselement 15 um eine Achse verschwenkbar ist, die parallel zur Längsachse L ist. Der Gelenkpunkt für die Verschwenkbarkeit befindet sich in dem gezeigten Beispiel in der Rotorebene (in der Zeichnung als Kreuz markiert). Somit können Gier-, Nick- und Rollmomente durch die beiden Propeller bereitgestellt werden. Die unteren Kreuze markieren die Schwenkachse der Hebelvorrichtungen 19, 20 zum Verstauen im Rumpf R. Der Auftrieb ist weitestgehend ungehindert möglich, weil der Luftstrom am Rumpf R vorbeiströmen kann. Die Auftriebsvel<toren V3 und V4 verlaufen hier durch die zur Längsachse L parallele Schwenkachse der Stabilisierungs- bzw. Auftriebselemente.

Figur 6 zeigt eine Draufsicht des VTOL-Flugzeugs 11 aus Figur 5. In einem Übergang zum Reiseflug wird das Vortriebselement 24 aktiviert und eine translatorische Geschwindigkeit entlang der Längsachse L wird aufgebaut. Die Auftriebs-/Stabilisierungselemente 15/13 und 16/14 werden zum Stillstand gebracht, fahren in den Rumpf R ein und die Klappen 17 und 18 schliessen.

Die Hebelvorrichtungen 19, 20 sind also innerhalb des Rumpfs verschwenkbar gelagert. Diese Verschwenkbarkeit sowie die Verschwenkbarkeit der Propeller wird jeweils durch einen Servomotor bereitgestellt und vom Computer 25 gesteuert/geregelt.

Die Erfindung wurde zwar anhand ihrer bevorzugten Ausführungsform(en) erläutert, doch es können viele weitere Änderungen und Variationen vorgenommen werden, ohne über den Umfang der vorliegenden Erfindung hinauszugehen. Daher ist es vorgesehen, dass die beiliegenden Patentansprüche Änderungen und Variationen abdecken, die im tatsächlichen Umfang der Erfindung enthalten sind.

**Bezugszeichenliste**

| | |
|---|---|
| 1,11 | VTOL-Flugzeug |
| 2,12 | Tragfläche |
| 3,13 | Auftriebselement |
| 4,14 | Auftriebselement |
| 5,15 | Stabilisierungselement |
| 6,16 | Stabilisierungselement |
| 7,17 | Klappen/Umlenkelemente |
| 8,18 | Klappen/Umlenkelemente |
| 9,19,20 | Hebelvorrichtung |
| 10,25 | Computer |
| 21 | Klappen |
| 22,24 | Vortriebselement |
| 23 | Cockpit |
| H | Hochachse |
| L | Längsachse |
| M | Massenmittelpunkt |
| Q | Querachse |
| R | Rumpf |
| V3 | Vektor der Auftriebskraft |
| V4 | Vektor der Auftriebskraft |

## Patentansprüche

1. VTOL-Flugzeug (1,11) aufweisend
ein Reiseflugsystem aufweisend mindestens eine Tragfläche (2,12), wobei die Tragfläche (2,12) ausgebildet ist zur Erzeugung von dynamischem Auftrieb während eines Reiseflugs,
ein Schwebeflugsystem aufweisend mindestens ein Auftriebselement (3,4,13,14) und mindestens ein Stabilisierungselement (5,6,15,16), wobei
das Auftriebselement (3,4,13,14) ausgebildet ist zum Bereitstellen einer Auftriebskraft für einen Schwebeflug und
das Stabilisierungselement (5,6,15,16) ausgebildet ist zum Bereitstellen mindestens einer Stabilisierungskraft mit einem jeweiligen Hebel bezüglich einer Längsachse (L), einer Querachse (Q) und/oder einer Hochachse (H) des VTOL-Flugzeugs (1,11) während des Schwebeflugs und während eines Übergangs vom Schwebeflug zum Reiseflug und eines Übergangs vom Reiseflug zum Schwebeflug.

2. VTOL-Flugzeug (1,11) nach Anspruch 1, wobei das Auftriebselement (3,4,13,14) derart ausgebildet ist, dass ein Vektor (V3,V4) der Auftriebskraft um die Längsachse (L), die Querachse (Q), und/oder eine zur Querachse (Q) parallele Achse schwenkbar ist.

3. VTOL-Flugzeug (1,11) nach einem der vorangehenden Ansprüche, wobei das Schwebeflugsystem zwei in einem Rumpf des VTOL-Flugzeugs angeordnete Auftriebselemente (3,4,13,14) umfasst, die jeweils zum Bereitstellen einer Auftriebskraft ausgebildet und so angeordnet sind, dass eine der beiden Auftriebskräfte bezüglich der Längsachse (L) vor und die andere hinter einem Massenmittelpunkt (M) des VTOL-Flugzeugs (1,11) angreifen.

4. VTOL-Flugzeug (1,11) nach Anspruch 3, wobei die beiden Auftriebselemente (3,4,13,14) oder jeweilige Umlenkelemente (7,8,17,18) der Auftriebselemente (3,4,13,14) derart verschwenkbar sind, dass die beiden Auftriebskräfte ein auf das VTOL-Flugzeug (1,11) wirkendes Giermoment erzeugen.

5. VTOL-Flugzeug (1,11) nach Anspruch 3 oder 4, wobei die beiden Auftriebselemente (3,4,13,14) derart ansteuerbar sind, dass mittels einer Schub-Differenz ein Nickmoment bereitstellbar ist.

6. VTOL-Flugzeug (1,11) nach einem der vorangehenden Ansprüche, wobei das mindestens eine Stabilisierungselement (5,6,15,16), insbesondere und das mindestens eine Auftriebselement (3,4,13,14), in einem Rumpf (R) des VTOL-Flugzeugs (1,11) verstaubar und aus dem Rumpf ausfahrbar ausgebildet ist.

7. VTOL-Flugzeug (1,11) nach Anspruch 6, wobei das Schwebeflugsystem eine Hebelvorrichtung (9,19,20) aufweist, welche mit einem ersten Ende schwenkbar innerhalb des Rumpfs (R) gelagert ist und an deren zweiten Ende das mindestens eine Stabilisierungselement (5,6,15,16) angeordnet ist.

8. VTOL-Flugzeug (1,11) nach Anspruch 6, wobei das Schwebeflugsystem eine Ausfahrvorrichtung aufweist, welche mit einem ersten Ende innerhalb des Rumpfs (R) befestigt ist und deren zweites Ende, an welchem das mindestens eine Stabilisierungselement (5,6,15,16) angeordnet ist, dazu ausgebildet ist, teleskopartig aus dem Rumpf (R) auszufahren.

9. VTOL-Flugzeug (1,11) nach Anspruch 7 oder 8, wobei das Stabilisierungselement (5,6,15,16) um mindestens eine Achse derart an dem zweiten Ende verschwenkbar gelagert ist, dass die Stabilisierungskraft zumindest ein auf das VTOL-Flugzeug (1,11) wirkendes Rollmoment erzeugt.

10. VTOL-Flugzeug (1,11) nach einem der Ansprüche 7 bis 9, wobei das Schwebeflugsystem dazu ausgebildet ist, die Hebelvorrichtung (9,19,20) bzw. die Ausfahrvorrichtung zu verschwenken.

11. VTOL-Flugzeug (1,11) nach einem der vorangehenden Ansprüche, wobei das Schwebeflugsystem mindestens zwei bezüglich der Längsachse (L) hintereinander angeordnete Stabilisierungselemente (5,6,15,16) umfasst.

12. VTOL-Flugzeug (1,11) nach einem der vorangehenden Ansprüche, wobei das Stabilisierungselement (5,6,15,16) einen motorisierten Propeller, 1<lapp-Propeller, Rotor, Mantelpropeller, Impeller und/oder ein Turbinen-Strahltriebwerk umfasst.

13. VTOL-Flugzeug (1,11) nach einem der vorangehenden Ansprüche, wobei das Stabilisierungselement (5,6,15,16) zur zyklischen und/oder kollektiven Blattverstellung ausgebildet ist.

14. VTOL-Flugzeug (1,11) nach einem der vorangehenden Ansprüche, wobei das Schwebeflugsystem dazu ausgebildet ist, eine Drehzahl und einen Schwenkwinkel des Stabilisierungselements (5,6,15,16) zu steuern.

15. VTOL-Flugzeug (1,11) nach einem der vorangehenden Ansprüche, wobei das Stabilisierungselement (5,6,15,16) als Multikopter ausgebildet ist.
